(19) Europäisches Patentamt
European Patent Office
Office européen des brevets

(11) **EP 1 795 777 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(51) Int Cl.:
***F16F 9/52*** *(2006.01)*      ***F16F 9/02*** *(2006.01)*

(21) Anmeldenummer: **07006976.0**

(22) Anmeldetag: **16.06.2006**

(54) **Gasfeder**

Pneumatic spring

Ressort à gaz

(84) Benannte Vertragsstaaten:
**DE ES FR GB IT**

(30) Priorität: **16.06.2005 DE 102005028015**
             **11.08.2005 DE 102005038115**

(43) Veröffentlichungstag der Anmeldung:
**13.06.2007 Patentblatt 2007/24**

(62) Dokumentnummer(n) der früheren Anmeldung(en) nach Art. 76 EPÜ:
**06012422.9 / 1 734 276**

(73) Patentinhaber: **Stabilus GmbH**
**56070 Koblenz (DE)**

(72) Erfinder:
• **Ansel, Holger**
**56218 Mülheim-Kärlich (DE)**
• **Bröder, Meik**
**56340 Dachsenhausen (DE)**
• **Bonnekessel, Stefan**
**RO-500080 Brasov (RO)**

• **Enders, Stephan**
**56072 Koblenz (DE)**
• **Köhl, Alexander**
**54290 Trier (DE)**
• **Maßmann, Rainer**
**53119 Bonn (DE)**
• **Mintgen, Rolf**
**56743 Thuer (DE)**
• **Nadler, Marc**
**56170 Bendorf (DE)**
• **Nieratschker, Willi**
**56072 Koblenz (DE)**
• **Sauer, Rainer**
**56727 Mayen (DE)**

(74) Vertreter: **Herzog, Markus et al**
**Weickmann & Weickmann**
**Patentanwälte**
**Postfach 86 08 20**
**81635 München (DE)**

(56) Entgegenhaltungen:
**DE-A1- 2 511 289**      **DE-A1- 3 141 295**
**DE-A1- 10 052 864**      **US-A- 4 613 115**

## Beschreibung

Die Erfindung betrifft eine Gasfeder mit einem Arbeitszylinder, der zusammen mit einer Ausgleichskolbenanordnung einen mit einem Arbeitsmedium gefüllten Arbeitsraum umgrenzt, und einer Arbeitsstange, die durch eine Öffnung des Arbeitszylinders verschiebbar in den Arbeitsraum hineinragt, wobei die Ausgleichskolbenanordnung von dem Druck des Arbeitsmediums und dem Druck eines in einem Ausgleichsraum vorgesehenen, sich bei Temperaturerhöhung ausdehnenden Ausgleichsmediums in einem das Volumen des Arbeitsraum vergrößerndem Sinne und von einem in einem Rückstellraum vorgesehenen Rückstellmedium in einem das Volumen des Arbeitsraum verkleinerndern Sinne beaufschlagt ist.

Derartige Gasfedern, deren Ziel es ist, die Temperaturabhängigkeit der Gasfedercharakteristik durch Einsatz des Ausgleichsmediums zu kompensieren, sind im Stand der Technik bekannt. Beispielhaft sei auf die DE 31 41 295 A1 verwiesen.

Hinsichtlich der als Ausgleichsmedium einsetzbaren Stoffe verweist die DE 31 41 295 A1 ganz pauschal auf "spezielle Flüssigkeit". Demgegenüber ist in der dem gleichen Sachgebiet entstammenden DE 25 11 289 A1 ausdrücklich Hydrauliköl als Ausgleichsmedium genannt. Gemäß der US 4,613,115 schließlich werden Zweiphasen-Systeme bestimmter Stoffe als Ausgleichsmedium eingesetzt, genauer gesagt Systeme, bei denen die flüssige und die gasförmige Phase des betrachteten Stoffes bei den jeweiligen Druck-Temperatur-Bedingungen koexistieren.

Alle diese Ausgleichsmedien haben sich in der Praxis jedoch als nicht in jeder Hinsicht zufriedenstellend erwiesen. Insbesondere verfügt das herkömmlich eingesetzte mineralische Öl über eine nicht zufriedenstellende nutzbare Volumenausdehnung in dem üblicherweise betrachteten Betriebszustandsfeld der Gasfeder zwischen einer Temperatur von etwa -30°C und einem Druck von etwa 50 bar einerseits und einer Temperatur von etwa +80°C und einem Druck von etwa 440 bar andererseits. Unter der "nutzbaren Volumenausdehnung" wird im Zusammenhang mit der vorliegenden Erfindung die Differenz der von einem Temperaturanstieg hervorgerufenen Volumenerhöhung und der durch den gleichzeitigen Druckanstieg hervorgerufenen Volumenminderung verstanden.

Neben diesen Nachteilen weisen die aus den genannten Druckschriften bekannten Gasfedern den weiteren Nachteil auf, einen aufwendigen Aufbau zu haben, der einen großen Bauraum benötigt, und dies insbesondere auf Grund der Ausbildung der Ausgleichskolbenanordnung. Beispielsweise ist bei der aus der DE 31 41 295 A1 bekannten Gasfeder ein in dem Arbeitszylinder verschiebbarer erster Kolben über ein Distanzstück mit einem zweiten Kolben verbunden, der in einem den Arbeitszylinder mit Abstand koaxial umschließenden Außenzylinder verschiebbar angeordnet ist und einen Rückstell- bzw. Federraum von dem Ausgleichsraum abtrennt.

Es ist daher Aufgabe der Erfindung, eine Gasfeder der eingangs genannten Art zu schaffen, die wenige einfache Bauteile sowie einen geringen Bauraum benötigt.

Diese Aufgabe wird erfindungsgemäß durch eine Gasfeder der eingangs genannten Art gelöst, welcher ferner einen Ausgleichszylinder umfasst, der den Arbeitszylinder mit Abstand umschließt, sich mit seinem vom Arbeitsstangenaustrittsende der Gasfeder entfernten Ende über den Arbeitszylinder hinaus erstreckt und an diesem Ende geschlossen ist, wobei der Ausgleichsraum im Wesentlichen von dem Ringraum zwischen Arbeitszylinder und Ausgleichszylinder gebildet ist, und bei welcher die Ausgleichskolbenanordnung einen einzigen Ausgleichskolben umfasst, der in dem Ausgleichszylinder verschiebbar aufgenommen und topfförmig ausgebildet ist mit einem Topfboden und einem vom Topfboden in Richtung des Arbeitsstangenaustrittsendes abstehenden und mit dem Arbeitszylinder in Eingriff stehenden Zylinderabschnitt, wobei dieser Ausgleichskolben den Arbeitsraum, den Ausgleichsraum und den Rückstellraum voneinander trennt.

Durch diese Ausbildung erfolgt durch einen einzigen Ausgleichskolben sowohl eine Abgrenzung des Ausgleichsraums vom Arbeitsraum als auch eine Abgrenzung des Ausgleichsraums und des Arbeitsraums von dem Rückstellraum. Damit wird sowohl die Bauteilezahl als auch die Baulänge reduziert, da der Durchmesser des Arbeitsraums kleiner als der Durchmesser des Rückstellraums ist und damit durch einen geringen Verschiebeweg des Ausgleichskolbens ein großer Volumenzuwachs des Arbeitsraums erreicht wird.

Im Hinblick auf eine weitere Reduzierung der Baulänge der Gasfeder wird ferner vorgeschlagen, dass der Zylinderabschnitt des topfförmigen Ausgleichskolbens in den Ringraum zwischen dem Ausgleichszylinder und dem Arbeitszylinder eingreift. Auf diese Weise kann die gesamte Länge des Arbeitsraums für die Bewegung der Arbeitsstange genutzt werden.

Auf gesonderte Führungselemente zwischen Ausgleichskolben und Ausgleichszylinder kann beispielsweise dann verzichtet werden, wenn der Zylinderabschnitt des topfförmigen Ausgleichskolbens zumindest mit einem Teil seiner Außenumfangsfläche an der Innenumfangsfläche des Ausgleichszylinders anliegt. Dies trägt zur weiteren Vereinfachung des Aufbaus und somit zur Reduzierung der Bauteilezahl bei.

Dadurch, dass an dem in den Zylinderabschnitt des topfförmigen Ausgleichskolbens ragenden freien Ende des Arbeitszylinders eine flanschartige. Erweiterung vorgesehen ist, auf der der Ausgleichskolben verschiebbar geführt ist, kann ein weiterer Auslegungsparameter zur Verfügung gestellt werden, der es erlaubt, die vom Ausgleichsmedium beaufschlagte Fläche des Ausgleichskolbens und das Volumen des Ausgleichsraums bei gegebener Länge des Ausgleichsraums unabhängig voneinander festzulegen.

Um Vibrationen und ein seitliches Ausweichen des Arbeitszylinders relativ zum Ausgleichszylinder vorbeugen zu können, wird in Weiterbildung der Erfindung vorgeschlagen, dass in dem Ringraum zwischen Ausgleichszylinder und Arbeitszylinder wenigstens ein Stützelement vorgesehen ist, welches den Arbeitszylinder relativ zum Ausgleichszylinder in Position hält und welches wenigstens einen Durchgang für Ausgleichsmedium aufweist. Dabei kann der Ausgleichszylinder für wenigstens ein Stützelement wenigstens einen Anschlag aufweist, welcher einen vorbestimmten Mindestabstand des wenigstens einen Stützelements von dem Arbeitsstangenaustrittsende sicherstellt.

Zusätzlich oder alternativ kann am Zylinderabschnitt, vorzugsweise dessen freiem Ende benachbart, eine Mehrzahl von Stützansätzen für den Arbeitszylinder vorgesehen sein. Diese Stützansätze können sich nach radial innen zum Arbeitszylinder hin erstrecken und können beispielsweise als Knaggen ausgebildet sein.

Vorzugsweise vergrößert sich das Ausgleichsmedium bei kontinuierlichem Temperaturanstieg kontinuierlich im Volumen. Dabei kann es zusätzlich oder alternativ ganz oder teilweise inkompressibel sein.

Grundsätzlich kann das erfindungsgemäß eingesetzte Ausgleichsmedium ein Öl oder ein Dehnwachs sein oder auch ein Zweiphasenmedium, dessen eine Phase flüssig und dessen andere Phase gasförmig ist, beispielsweise Schwefelhexafluorid.

Unabhängig davon ist es aber, um Gasfedern der eingangs genannten Art angeben zu können, welche über eine verbesserte Kompensation der Temperaturabhängigkeit der Gasfedercharakteristik verfügen, auch möglich, dass bei diesen das Ausgleichsmedium so gewählt ist, dass seine kritische Temperatur zwischen einer ersten Temperatur und einer zweiten Temperatur liegt, wobei die erste Temperatur im Wesentlichen gleich der unteren Grenztemperatur eines Betriebstemperaturbereichs der Gasfeder ist, und wobei die zweite Temperatur die obere Grenztemperatur des Betriebstemperaturbereichs der Gasfeder um etwa 100°C übersteigt, und bei welcher die Beaufschlagungsfläche der Ausgleichskolbenanordnung durch das Ausgleichsmedium, die Beaufschlagungsfläche der Ausgleichskolbenanordnung durch das Arbeitsmedium, das Volumen des Arbeitsraums bei einer Auslegungstemperatur der Gasfeder, das Volumen des Ausgleichsraums bei der Auslegungstemperatur der Gasfeder und die die Ausgleichskolbenanordnung beaufschlagende Rückstellkraft des Rückstellmediums bei der Auslegungstemperatur der Gasfeder derart bemessen und aufeinander abgestimmt sind, dass bei einer die kritische Temperatur des Ausgleichsmediums nicht übersteigenden Betriebstemperatur der Gasfeder der Zustandspunkt des Ausgleichsmediums auf oder oberhalb der Dampfdruckkurve liegt.

Es wurde nämlich erkannt, dass es neben "klassischen" Flüssigkeiten, d.h. Flüssigkeiten, wie mineralischem Öl, deren Siedelinien fern des vorstehend genannten Betriebszustandsfelds liegen und die daher einerseits zwar im Wesentlichen inkompressibel sind, andererseits aber auch nur eine geringe Volumenausdehnung aufweisen, und Zweiphasen-Systemen, deren hauptsächlich von der Gasphase herrührende, hohe Volumenausdehnung durch die starke Kompressibilität der Gasphase wieder zunichte gemacht wird, noch eine dritte Gruppe von Stoffen gibt, die im fraglichen Betriebszustandsfeld zwar einerseits eine beachtliche Volumenausdehnung aufweisen, andererseits aber doch im Wesentlichen inkompressibel sind, so dass die Volumenausdehnung im Wesentlichen ungeschmälert zur Kompensation der Temperaturabhängigkeit der Gasfedercharakteristik genutzt werden kann. Die grundlegende Idee besteht darin, dass Flüssigkeiten kurz vor dem Sieden einerseits eine relativ große Volumenausdehnung aufweisen, andererseits aber auf Grund ihrer Eigenschaft, immer noch eine Flüssigkeit zu sein, im Wesentlichen inkompressibel sind. Stoffe, deren kritische Temperatur mehr als 100°C oberhalb der oberen Grenztemperatur des üblichen Betriebstemperaturbereichs von Gasfedern liegt, verfügen jedoch über keine die nutzbare Volumenausdehnung von mineralischem Öl deutlich übersteigende nutzbare Volumenausdehnung. Ferner wurde erkannt, dass bei Stoffen, deren kritische Temperatur innerhalb des üblichen Betriebstemperaturbereichs von Gasfedern liegt und bei denen man bei Betriebstemperaturen oberhalb der kritischen Temperatur nicht mehr zwischen der gasförmigen und der flüssigen Phase unterscheiden kann, die Dichteverhältnisse doch so sind, dass das Verhalten dieser Stoffe in diesem Temperaturbereich im Wesentlichen dem Verhalten einer Flüssigkeit entspricht. Schließlich wurde auch noch erkannt, dass es möglich ist, die Abmessungen der Gasfeder und die in der Gasfeder herrschenden Drücke so aufeinander abzustimmen, dass ein Übergang des jeweils verwendeten Ausgleichsmediums in den flüssig-gasförmigen Zweiphasen-Zustand zuverlässig verhindert werden kann.

Wenn nun davon gesprochen wird, dass der Zustandspunkt des Ausgleichsmediums oberhalb der Dampfdruckkurve liegt, so wird dabei auf die übliche Darstellung des Druck-Temperatur-Diagramms (p-T-Diagramm) Bezug genommen, und ist damit gemeint, dass das Ausgleichmedium in seiner flüssigen Phase vorliegt.

Vorteilhafterweise sollte die zweite Temperatur die obere Grenztemperatur des Betriebstemperaturbereichs der Gasfeder nur um etwa 60°C übersteigen. Am günstigsten ist es sogar, wenn die zweite Temperatur im Wesentlichen gleich der oberen Grenztemperatur des Betriebstemperaturbereichs der Gasfeder ist, d.h. wenn die kritische Temperatur des Ausgleichsmediums in dem Betriebstemperaturbereichs der Gasfeder liegt.

Ferner kann das Ausgleichsmedium in Abhängigkeit der jeweiligen Einsatzbedingungen aus der die Stoffe Kohlendioxid ($CO_2$), Ethan ($C_2H_6$), Propan ($C_3H_8$), Schwefelwasserstoff ($H_2S$), Ammoniak ($NH_3$), Methylenchlorid ($CH_3Cl$), Schwefeldioxid ($SO_2$) und Schwefelhexafluorid ($SF_6$) umfassenden Gruppe ausgewählt sein. Beim Einsatz der erfindungsgemäßen Gasfeder in Kraftfahrzeugen, in Bürostühlen und dergleichen mit dem Menschen mehr oder weniger unmittelbar in Berührung kommenden Gerätschaften sind selbstverständlich noch eine Reihe weiterer Auswahlkriterien zu beachten, beispielsweise die Entflamm- bzw. Brennbarkeit, die Toxizität, die Umweltverträglichkeit und dergleichen mehr. Unter Berücksichtigung all dieser Kriterien ist vor allem der Einsatz von Kohlendioxid ($CO_2$) oder Schwefelhexafluorid ($SF_6$) vorteilhaft, wobei Kohlendioxid ($CO_2$) über eine deutlich höhere nutzbare Volumenausdehnung verfügt.

Ferner hat es sich als vorteilhaft erwiesen, wenn die Gasfeder derart ausgelegt ist, dass bei einer die kritische Temperatur des Ausgleichmediums übersteigenden Betriebstemperatur der Gasfeder der Druck im Ausgleichsraum stets größer ist als der kritische Druck des Ausgleichsmediums.

Auch wenn grundsätzlich die Verwendung des erfindungsgemäßen Ausgleichmediums in Alleinstellung bevorzugt ist, um das gesamte zur Verfügung stehende Volumen des Ausgleichsraums zur temperaturabhängigen Dehnung und damit Verstellung des Ausgleichskolbens nutzen zu können, kann es in Sonderfällen wünschenswert sein, in den Ausgleichsraum ein Stoffgemisch aus wenigstens zwei Stoffen einzubringen, wobei wenigstens einer der Stoffe ein Ausgleichmedium mit den genannten Eigenschaften ist. Dies kann beispielsweise dann vorteilhaft sein, wenn die Abmessungen der Gasfeder und damit beispielsweise auch das Volumen des Ausgleichsraums durch äußere Vorgaben festgelegt sind, zur Erzielung des gewünschten Effekts aber nur ein Teilvolumen mit dem Ausgleichsmedium gefüllt werden muss.

Wie dies an sich bekannt ist, kann der Arbeitsraum durch einen mit der Arbeitsstange verbundenen Kolben in eine erste Arbeitskammer und eine zweite Arbeitskammer unterteilt sein, wobei die erste Arbeitskammer an die Ausgleichskolbenanordnung angrenzt und sich die Arbeitsstange durch die zweite Arbeitskammer erstreckt.

Ferner kann der Rückstellraum beispielsweise mit einem unter Druck stehenden Gas gefüllt sein, welches den Ausgleichskolben in Richtung einer Verringerung des Volumens des Arbeitsraums beaufschlagt. Hierdurch kann eine besonders kurze Baulänge der Gasfeder erzielt werden. Alternativ oder zusätzlich kann in dem Rückstellraum aber auch eine Federanordnung aufgenommen sein, welche auf den Ausgleichskolben einwirkt. Die Federanordnung kann dabei wenigstens eine Druckfeder, beispielsweise wenigstens eine Schraubendruckfeder, ein Tellerfederpaket oder dergleichen umfassen.

Die Erfindung wird im Folgenden an einigen Ausführungsbeispielen an Hand der beigefügten Zeichnung näher erläutert werden. Es stellt dar:

Figur 1    eine Gasfeder im Querschnitt;

Figur 2    einen Ausschnitt eines Ausgleichskolbens im Querschnitt;

Figur 3    eine Ansicht ähnlich Figur 2 einer abgewandelten Ausführungsform;

Figur 4    einen Ausschnitt von Arbeitszylinder, Ausgleichszylinder und Ausgleichskolben der Gasfeder nach Figur 1 im Querschnitt;

Figur 5    einen Ausschnitt eines zweiten Ausführungsbeispiels eines ausgleichskolbenseitigen Endes des Arbeitszylinders im Querschnitt;

Figur 6    einen Ausschnitt eines dritten Ausführungsbeispiels des ausgleichskolbenseitigen Endes des Arbeitszylinders im Querschnitt;

Figur 7    einen Ausschnitt eines vierten Ausführungsbeispiels des ausgleichskolbenseitigen Endes des Arbeitszylinders im Querschnitt;

Figur 8    einen Ausschnitt eines fünften Ausführungsbeispiels des ausgleichskolbenseitigen Endes des Arbeitszylinders im Querschnitt;

Figur 9    einen Ausschnitt eines sechsten Ausführungsbeispiels des ausgleichskolbenseitigen Endes des Arbeitszylinders im Querschnitt;

Figur 10    einen Ausschnitt eines siebten Ausführungsbeispiels des ausgleichskolbenseitigen Endes des Arbeitszylinders im Querschnitt;

Figur 11    einen Ausschnitt eines achten Ausführungsbeispiels des ausgleichskolbenseitigen Endes des Arbeitszylinders im Querschnitt;

Figur 12    einen Ausschnitt eines neunten Ausführungsbeispiels des ausgleichskolbenseitigen Endes des Arbeitszylinders im Querschnitt;

Figur 13    einen Ausschnitt eines zweiten Ausführungsbeispiels des kolbenstangenseitigen Endes der Gasfeder im Querschnitt;

Figur 14    einen Ausschnitt eines dritten Ausführungsbeispiels des kolbenstangenseitigen Endes der Gasfeder im Querschnitt;

Figur 15    einen Ausschnitt eines vierten Ausführungsbeispiels des kolbenstangenseitigen Endes der Gasfeder im Querschnitt;

Figur 16    einen Ausschnitt eines fünften Ausführungsbeispiels des kolbenstangenseitigen Endes der Gasfeder im Querschnitt;

Figur 17    einen Ausschnitt eines sechsten Ausführungsbeispiels des kolbenstangenseitigen Endes der Gasfeder im Querschnitt; und

Figur 18    einen Ausschnitt eines siebten Ausführungsbeispiels des kolbenstangenseitigen Endes der Gasfeder im Querschnitt.

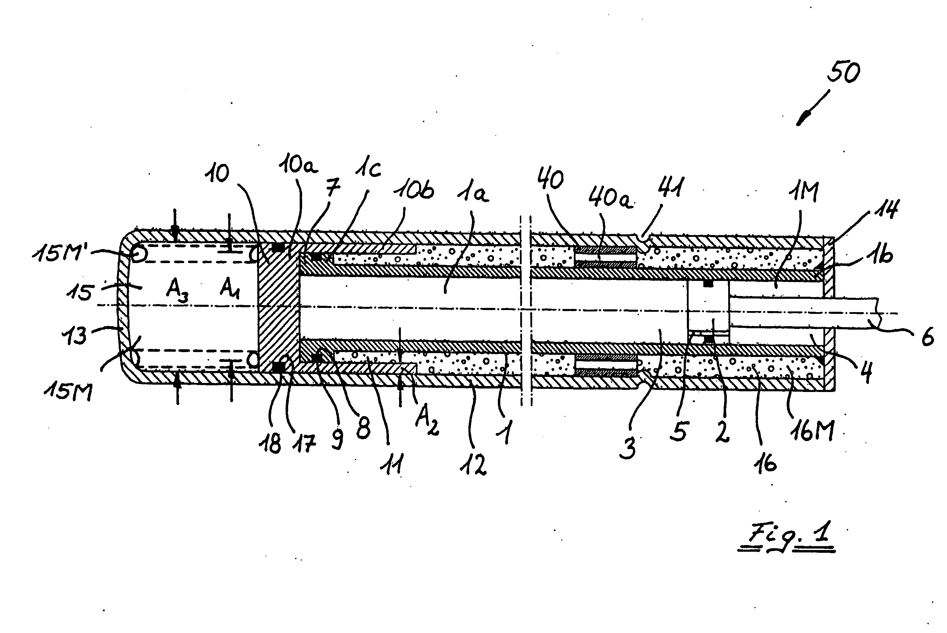

In Figur 1 ist eine erfindungsgemäße Gasfeder ganz allgemein mit 50 bezeichnet. Die Gasfeder 50 besitzt einen Arbeitszylinder 1, in dem ein Arbeitskolben 2 verschiebbar geführt ist. Der Arbeitskolben 2 unterteilt den Innenraum 1a des Arbeitszylinders 1 in eine erste Arbeitskammer 3 und eine zweite Arbeitskammer 4. An dem Arbeitskolben 2 ist eine Kolbenstange 6 befestigt, die die nach außen verschlossene zweite Arbeitskammer 4 durchsetzt und abgedichtet aus der Gasfeder 1 heraus geführt ist.

Um die Bewegung des Arbeitskolbens 2 in dem mit einem unter Druck stehenden Gas 1M gefüllten Innenraum 1a des Arbeitszylinders 1 dämpfen zu können, ist in dem Arbeitskolben 2 eine die erste Arbeitskammer 3 mit der zweiten Arbeitskammer 4 verbindende Drosselbohrung 5 vorgesehen. Zusätzlich oder alternativ zu dieser Drosselbohrung 5 könnte aber im Arbeitszylinder 1 auch wenigstens eine Längsnut ausgebildet sein.

Das dem Kolbenstangenaustrittsende 1b entgegengesetzte, offene Ende 1c des Arbeitszylinders 1 ist mittels eines topfförmigen Ausgleichskolbens 10 verschlossen. Der Ausgleichskolben 10 umfasst einen in dem dargestellten Ausführungsbeispiel kreisscheibenförmigen Topfboden 10a und einen vom Topfboden 10a in Richtung des Kolbenstangenaustrittsendes 1b abstehenden Zylinderabschnitt 10b. Der Zylinderabschnitt 10b, dessen Innenraum die Topföffnung 11 des Ausgleichskolbens 10 bildet, ist auf der Außenumfangsfläche des Arbeitszylinders 1 geführt. Und zwar besitzt der Arbeitszylinder 1 an seinem Ende 1c eine flanschartige Erweiterung 7, in deren radial äußerer, umlaufender Mantelfläche eine Ringnut 8 vorgesehen ist, in die ein O-Ring 9 eingesetzt ist. Auf dieser flanschartigen Erweiterung 7 des Endes 1c des Arbeitszylinders 1 ist der Zylinderabschnitt 10b des Ausgleichskolbens 10 verschiebbar und durch den O-Ring 9 abgedichtet geführt.

Das unter Druck stehende Gas 1M im Innenraum 1a des Arbeitszylinders 1 beaufschlagt den Ausgleichskolben 10 auf der Fläche $A_1$, da selbst bei der in Figur 1 dargestellten Anlage des Ausgleichskolbens 10 am freien Ende 1c des Arbeitszylinders 1 das Gas 1M in den Anlagespalt zwischen Ausgleichskolben 10 und Arbeitszylinder 1 eindringt. Der Druck dieses Gases 1M übt auf den Ausgleichskolben 10 eine im Sinne einer Vergrößerung des Innenraums 1a des Arbeitszylinders 1 gerichtete Kraft aus.

Darüber hinaus ist der Ausgleichskolben 10 mit seiner äußeren zylindrischen Mantelfläche in einem Ausgleichszylinder 12 axial verschiebbar angeordnet, der den Arbeitszylinder 1 mit Abstand koaxial umschließt und an seinem der Kolbenstange 6 abgewandten Ende durch einen Boden 13 verschlossen ist. Eine Verschlussscheibe 14 verschließt kolbenstangenseitig sowohl den Arbeitszylinder 1 als auch den Ausgleichszylinder 12, so dass die Außenabdichtung der Kolbenstange 6 zur Atmosphäre von der Abdichtung des Ausgleichsraumes 16 nach außen statisch, d.h. ohne bewegliche Teile ausgeführt ist.

Der zwischen dem Arbeitszylinder 1 und dem Ausgleichszylinder 12 gebildete Ringraum 16 ist mit einem Ausgleichsmedium 16M gefüllt, das sich bei Temperaturerhöhung ausdehnt, d.h. in seinem Volumen vergrößert. Das Ausgleichsmedium 16M beaufschlagt den Ausgleichskolben 10 auf der Stirnfläche $A_2$ des Zylinderabschnitts 10b und übt auf diesen eine im Sinne einer Vergrößerung des Innenraums 1a des Arbeitszylinders 1 gerichtete Kraft aus.

Zur Abdichtung des Ausgleichsraumes 16 gegenüber einem zwischen dem Ausgleichskolben 10 und dem Boden 13 gebildeten und mit einem unter Druck stehenden Gas 15M gefüllten Rückstellraum 15 weist der Ausgleichskolben 10 an seiner äußeren Mantelfläche eine radial umlaufende Nut 17 auf, in die eine Ringdichtung 18 eingesetzt ist. Daher beaufschlagt das unter Druck stehende Gas 15M im Rückstellraum 15 den Ausgleichskolben 10 auf der Fläche $A_3$ und übt auf diesen eine im Sinne einer Verkleinerung des Innenraums 1a des Arbeitszylinders 1 gerichtete Kraft aus.

Die Vorspannung des Ausgleichskolbens 10 in Richtung auf das freie Ende 1c des Arbeitszylinders 1 zu könnte zusätzlich oder alternativ zum Vorsehen des unter Druck stehenden Gases 15M in dem Rückstellraum 15 auch durch das Anordnen wenigstens einer auf den Ausgleichskolben 10 einwirkenden Druckfeder 15M' im Rückstellraum 15 oder/und wenigstens einer mit dem Ausgleichskolben 10 verbundenen Zugfeder im Ausgleichsraum 16 bewerkstelligt werden.

Wie vorstehend bereits erwähnt, ist der Innenraum 1a des Arbeitszylinders 1 mit einem unter Druck stehenden Gas 1M gefüllt, so dass der Ausgleichskolben 10 in den Ausgleichszylinder 12 hinein, d.h. im Sinne einer Verkleinerung des Rückstellraums 15, vorgespannt ist. Der Druck des im Rückstellraum 15 vorgesehenen Gases 15M und die Beaufschlagungsflächen $A_1$ und $A_3$ sind so gewählt bzw. ausgelegt, dass eine auf den Ausgleichskolben 10 im Sinne einer Vergrößerung des Rückstellraums 15 wirkende Kraft immer, d.h. insbesondere unabhängig von der Stellung des Arbeitskolbens 2 im Innenraum 1a des Arbeitszylinders 1, größer ist als die Kraft, die durch den Druck im Innenraum 1a des Arbeitszylinders 1 auf den Ausgleichskolben 10 einwirkt.

Nachzutragen ist noch, dass ferner ein Stützelement 40 vorgesehen ist, welches den Arbeitszylinder 1 an dem Ausgleichszylinder 12 abstützt und relativ zu diesem in Position hält. Das Stützelement 40 weist wenigstens einen Durchgang 40a für Ausgleichsmedium 16M auf, der den Durchtritt von Ausgleichsmedium 16M möglichst wenig behindert. Mittels einer Sicke 41 des Ausgleichszylinders 12 ist sichergestellt, dass das Stützelement 40 von dem kolbenstangenseitigen Ende 1b des Arbeitszylinders 1 stets einen vorbestimmten Mindestabstand hält. Selbstverständlich kann auch eine Mehrzahl derartiger Abstandselemente vorgesehen sein.

Um eine optimale Ausnutzung des Ausgleichsmediums 16M zu erreichen, befindet sich der Ausgleichskolben 10 bei der tiefsten für den Betrieb der Gasfeder 50 vorgesehen Temperatur von z:B. -30°C nahe an dem stirnseitigen Ende 1c der flanschartigen Erweiterung 7. Dies bedeutet auch das kleinstmögliche Volumen des Innenraums 1a des Arbeitszylinders 1.

Kommt es zu einem Anstieg der Umgebungstemperatur, so dehnt sich das Ausgleichsmedium 16M aus und verlagert den Ausgleichskolben 10 in Richtung zum Boden 13 des Ausgleichszylinders 12, d.h. im Sinne einer Verkleinerung des Rückstellraums 15. Dadurch wird der Innenraum 1a des Arbeitszylinders 1 vergrößert. Daher steigt der Druck, der in Folge des Temperaturanstiegs im Innenraum 1a des Arbeitszylinders 1 bei konstantem Volumen des Innenraums 1a eigentlich steigen würde, nicht oder nur in einem geringeren Maß an, weil die Volumenvergrößerung des Innenraums 1a des Arbeitszylinders 1 den Auswirkungen der Temperaturerhöhung entgegenwirkt.

Als Ausgleichsmedium 16M wird bevorzugt Kohlendioxid ($CO_2$) eingesetzt, das durch entsprechende Auslegung der Geometrie bzw. der Abmessungen der Gasfeder 50 und deren Bauteile in dem Ausgleichsraum 16 unter einem so hohen Druck gehalten wird, dass sich sein Zustandspunkt im Druck-Temperatur-Diagramm (p-T-Diagramm) in dem üblichen Betriebstemperaturbereich von Gasfedern, d.h. zwischen einer unteren Grenztemperatur $T_u$ von etwa -30°C und einer oberen Grenztemperatur $T_o$ von etwa +80°C, stets oberhalb oder allenfalls auf der Dampfdruckkurve befindet. Die Tatsachen, dass die kritische Temperatur $T_k$ von Kohlendioxid etwa 31°C beträgt und damit in dem betrachteten Betriebstemperaturbereich liegt, und dass man bei Temperaturen oberhalb der kritischen Temperatur nicht mehr zwischen gasförmiger und flüssiger Phase unterscheiden kann, hat wider Erwarten keine nachteiligen Auswirkungen auf die gewünscht hohe nutzbare Volumenausdehnung, da die Dichte des Kohlendioxids bei den hier relevanten Drücken so hoch ist, dass es sich im Wesentlichen wie eine Flüssigkeit verhält. Durch die erfindungsgemäße Bemessung der Gasfeder 50 ist sogar sichergestellt, dass der Druck des Kohlendioxids bei Temperaturen oberhalb der kritischen Temperatur $T_k$ stets oberhalb des kritischen Drucks $p_k$ von Kohlendioxid liegt, der 73,8 bar beträgt.

Unter der "nutzbaren Volumenausdehnung $\Delta V$" oder genauer gesagt der "relativen nutzbaren Volumenausdehnung $\Delta V/V$" wird im Zusammenhang mit der vorliegenden Erfindung die Differenz der von einem Temperaturanstieg hervorgerufenen Volumenerhöhung und der durch den gleichzeitigen Druckanstieg hervorgerufenen Volumenminderung verstanden, d.h.

$$\Delta V/V \; = \; (T_o - T_u) \cdot \gamma \; - \; (p_o - p_u) \cdot \alpha,$$

wobei

$T_o$     die obere Grenztemperatur des Betriebstemperaturbereichs,

$T_u$     die untere Grenztemperatur des Betriebstemperaturbereichs,

$p_o$     den Druck im Ausgleichsraum bei der oberen Grenztemperatur,

$p_u$     den Druck im Ausgleichsraum bei der unteren Grenztemperatur,

γ    den Volumenausdehnungskoeffizienten des Ausgleichsmediums und

α    den Kompressibilitätsfaktor des Ausgleichsmediums

bezeichnen.

Die relative nutzbare Volumenausdehnung ΔV/V des als Vergleichsmedium herangezogenen mineralischen Öls beträgt in dem vorstehend angegebenen Betriebstemperaturbereich etwa 6,2%.

Im Gegensatz hierzu bietet Kohlendioxid eine relative nutzbare Volumenausdehnung ΔV/V von 31,8%. Überdies bietet Kohlendioxid die Vorteile, kostengünstig erhältlich, nicht giftig, umweltverträglich, nicht brennbar und selbst im Gemisch mit anderen Stoffen, insbesondere Luft, nicht explosiv zu sein.

Als weitere Ausgleichsmedien 16M, die in mit Menschen mittelbar oder unmittelbar in Berührung kommenden Gasfedern ohne Weiteres eingesetzt werden können, sind Distickstoffoxid ($N_2O$) und Schwefelhexafluorid ($SF_6$) zu nennen. Die kritische Temperatur $T_k$ von Distickstoffoxid ($N_2O$) beträgt etwa 46,4°C und sein kritischer Druck $p_k$ etwa 72,5 bar. Ferner bietet Distickstoffoxid eine relative nutzbare Volumenausdehnung ΔV/V von etwa 26%, was nur geringfügig unter jener von Kohlendioxid liegt. Die kritische Temperatur $T_k$ von Schwefelhexafluorid ($SF_6$) beträgt etwa 45,6°C und sein kritischer Druck $p_k$ etwa 37 bar. Ferner bietet Schwefelhexafluorid eine relative nutzbare Volumenausdehnung ΔV/V von etwa 10,7%, was zwar unter jener von Kohlendioxid, aber immer noch deutlich über jener von mineralischem Öl liegt.

Für Sonderanwendungen, bei denen Eigenschaften, wie Brennbarkeit, Explosivität, Toxizität, eine mögliche Geruchsbelästigung und dergleichen, keine einschränkenden Eigenschaften oder gar Ausschlusskriterien darstellen, können überdies auch Ethan, Propan, Schwefelwasserstoff, Ammoniak, Methylenchlorid und Schwefeldioxid eingesetzt werden. Die Parameter dieser Stoffe sind in der nachfolgenden Tabelle 1 aufgeführt.

Tabelle 1:

| | $T_k$ [°C] | $p_k$ [bar] | ΔV/V [%] |
|---|---|---|---|
| Ethan | 32,1 | 50,3 | 16,1 |
| Propan | 96,9 | 43,6 | 13,0 |
| Schwefelwasserstoff | 100,4 | 89,0 | 19,7 |
| Ammoniak | 132,4 | 113,0 | 22,6 |
| Methylenchlorid | 143,0 | 68,9 | 14,6 |
| Schwefeldioxid | 157,5 | 80,3 | 16,6 |

An dieser Stelle sei darauf hingewiesen, dass die vorstehend angegebenen Werte für die relative nutzbare Volumenausdehnung ΔV/V auf Grundlage der vorstehend angegebenen Formel unter der vereinfachenden und von der tatsächlichen Konstruktion der Gasfeder unabhängigen Annahme berechnet worden sind, dass der Druck im Ausgleichsraum 16 bei der oberen Grenztemperatur von +80°C etwa 440 bar und bei der unteren Grenztemperatur von -30°C etwa 50 bar beträgt. Die angegebenen Werte können daher lediglich größenordnungsmäßig einen Eindruck über die Eignung des einen oder anderen Stoffs als Ausgleichmedium vermitteln.

Im Folgenden sollen nun noch einige Ausführungsvarianten der erfindungsgemäßen Gasfeder näher erläutert werden:

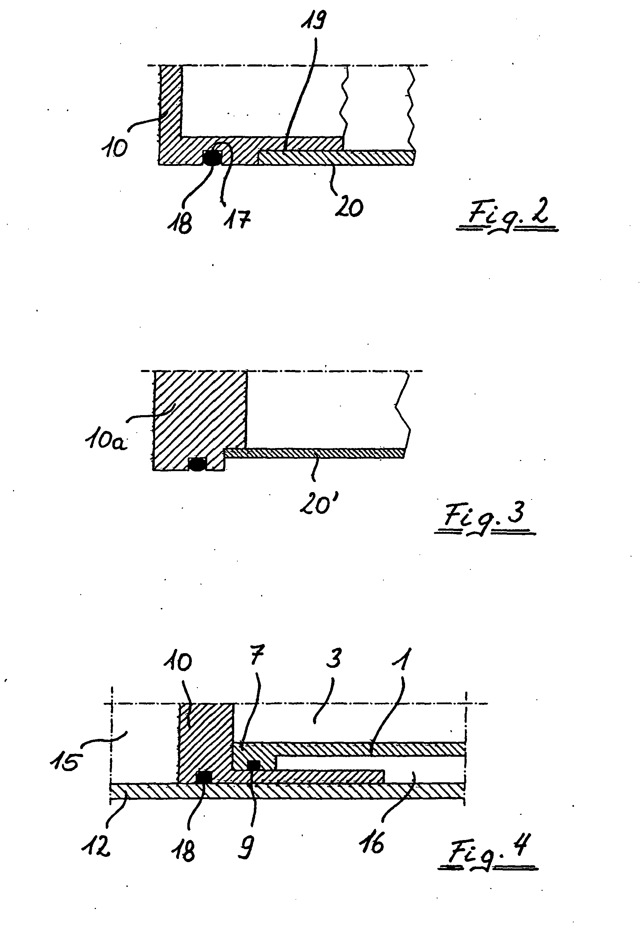

In den Figuren 1 und 4 ist der Ausgleichskolben 10 einteilig ausgeführt, während er in Figur 2 an seiner zylindrischen Mantelfläche eine radial umlaufende stufige Ringvertiefung 19 aufweist, in die eine die Topflänge vergrößernde Dichthülse 20 fest eingesetzt ist, die den gleichen Außendurchmesser aufweist, wie der Ausgleichskolben 10. Stirnseitig kann die Dichthülse 20 über ein nicht dargestelltes Dichtelement wie z.B. einen O-Ring gegenüber dem Ausgleichskolben 10 abgedichtet sein.

Obgleich der Ausgleichskolben 10 auch bei der Ausführungsform gemäß Figur 2 topfförmig ausgebildet ist, sei an dieser Stelle mit Bezug auf Figur 3 darauf hingewiesen, dass die Topfform grundsätzlich auch erst durch das Zusammenspiel eines im Wesentlichen scheibenförmigen Basisteils 10a und einer im Wesentlichen zylindrischen Hülse 20' gebildet sein kann. Reicht die Dicke des scheibenförmigen Basisteils 10a als Führungslänge des Ausgleichskolbens 10 im Ausgleichszylinder 12 aus, so braucht die Hülse 20' nicht notwendigerweise den gleichen Außendurchmesser aufzuweisen wie der Ausgleichskolben 10.

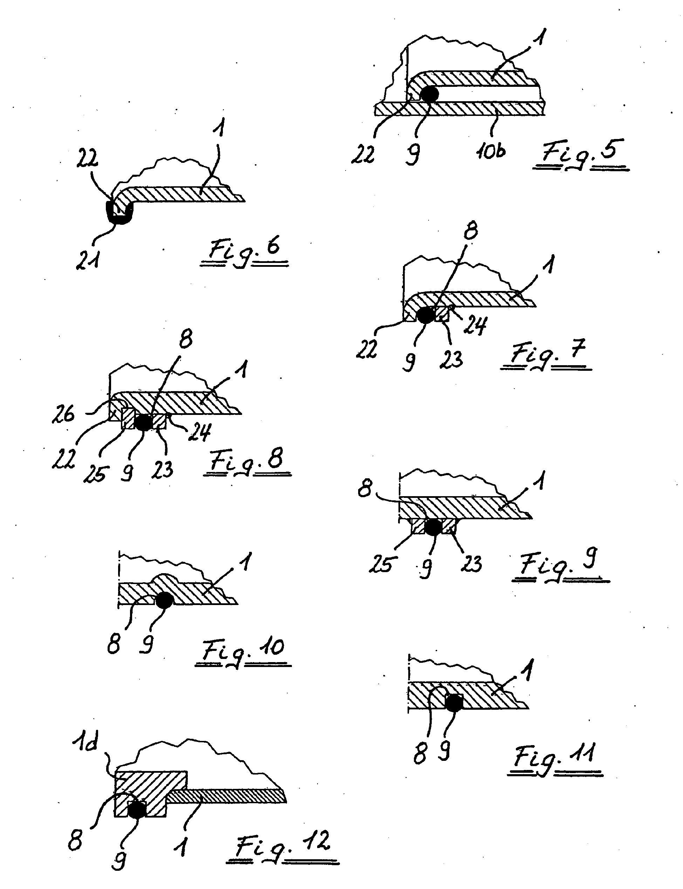

Die Figuren 5 bis 12 zeigen unterschiedliche Ausgestaltungen des ausgleichskolbenseitigen Endes des Arbeitszylinders 1 und dessen Abdichtung gegenüber dem Ausgleichskolben 10.

In Figur 5 ist das ausgleichskolbenseitige Ende 1c des rohrartigen Arbeitszylinders 1 zu einem Flansch 22 radial nach außen umgeformt und nimmt in seiner Hohlkehle den O-Ring 9 auf.

Auch in den Figuren 6, 7 und 8 ist das ausgleichskolbenseitige Ende des rohrartigen Arbeitszylinders als Flansch 22 radial nach außen umgeformt. Dabei ist in Figur 6 ein Dichtring 21 mit einem U-Querschnitt auf den Flansch 22 aufgesteckt.

In Figur 7 ist in einem Abstand parallel zum Flansch 22 ein den Arbeitszylinder 1 umschließender Stützring 23 angeordnet und durch einen Sicherungsring 24 an dem Arbeitszylinder 1 gesichert. Der Ringspalt zwischen Flansch 22 und Stützring 23 bildet die den O-Ring 9 aufnehmende Ringnut 8.

In Figur 8 liegt im Abstand parallel zu dem durch den Sicherungsring 24 gesicherten Stützring 23 ein zweiter Stützring 25 an dem Flansch 22 an und ragt radial in eine Ringnut 26 im Arbeitszylinder 1. Zwischen den beiden Stützringen 23 und 25 ist die Ringnut 8 gebildet, die den O-Ring 9 aufnimmt.

In Figur 9 sind im Abstand parallel zueinander zwei Stützringe 23 und 25 auf die Mantelfläche des Arbeitszylinders 1 aufgeschweißt, die zwischen sich die den O-Ring 9 aufnehmende Ringnut 8 bilden.

Bei den Ausführungsbeispielen der Figuren 10 und 11 ist keine flanschartige Erweiterung vorhanden sondern Ringnuten 8 zur Aufnahme des O-Rings 9 in der Mantelfläche des Arbeitszylinders 1 ausgebildet. In Figur 10 ist die Ringnut durch radiale Verformung und in Figur 11 durch spanende Formung erzeugt.

Gemäß Figur 12 ist die den O-Ring 9 aufnehmende Ringnut 8 an einem gesonderten, mit dem Arbeitszylinder 1 jedoch betriebsfest verbundenen Teil 1d ausgebildet.

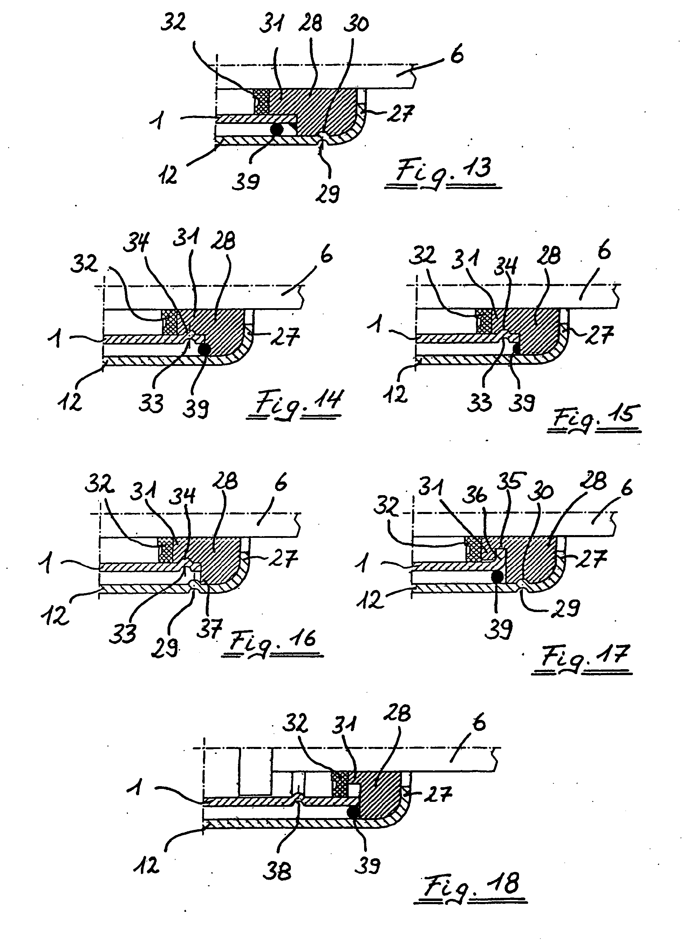

Die Figuren 13 bis 18 zeigen das kolbenstangenseitige Ende der Gasfeder 50.

Dabei ist das kolbenstangenseitige Ende des rohrartig ausgebildeten Ausgleichszylinders 12 zu einem radial nach innen gerichteten Flansch 27 umgeformt. An dem Flansch 27 ist ein ringförmiges Abstützelement 28 axial in Anlage. Das Abstützelement 28 wird an seiner radial umlaufenden Mantelfläche von dem Ausgleichszylinder 12 umschlossen, wobei bei den Ausführungsbeispielen der Figuren 13, 16 und 17 durch Verformen eine Sicke 29 im Ausgleichszylinder 12 erzeugt ist, die in den Figuren 13 und 17 radial in eine entsprechende Ausnehmung 30 des Abstützelements 28 eingreift.

Das in die Gasfeder ragende Ende des Abstützelements 28 besitzt eine im Durchmesser auf den Innendurchmesser des Arbeitszylinders 1 reduzierte Stufe 31, die in das Ende des Arbeitszylinders 1 eingreift.

Ein ringförmiges Dichtelement 32 ist stirnseitig an dem Abstützelement 28 abgestützt und liegt radial innen an der Kolbenstange 6 und radial außen an der Innenwand des Arbeitszylinders 1 an.

In Figur 13 ist der Arbeitszylinder mit dem Abstützelement 28 verschweißt, während bei den Ausführungsbeispielen der Figuren 14 bis 16 durch Verformen des Arbeitszylinders 1 eine radial nach innen gerichtete Sicke 33 erzeugt ist, die in eine entsprechende Ausnehmung 34 in der Stufe 31 des Abstützelements 28 eingreift.

In Figur 17 besitzt die Stufe 31 des Abstützelements 28 an ihrer radial umlaufenden Mantelfläche eine Ringnut 35, in die eine flanschartige, radial nach innen gerichtete Umformung 36 des Endes des Arbeitszylinders 1 eingreift.

An der Sicke 29 in Figur 16 ist die zur Stufe 31 führende Schulter 37 des Abstützelements 28 in Anlage.

In Figur 18 ist in einem axialen Abstand zum Dichtelement 32 eine durch Verformen des Arbeitszylinders 1 erzeugte, radial nach innen gerichtete Sicke 38 ausgebildet, die einen die Ausfahrbewegung des Kolbens 2 begrenzenden Anschlag bildet.

In den Figuren 13 bis 15 und 17 bis 18 ist in dem Ausgleichsraum 16 nahe dem Abstützelement 28 oder an diesem axial anliegend ein Dichtring 39 angeordnet, der radial nach innen an der Außenwand des Arbeitszylinders 1 und radial nach außen an der Innenwand des Ausgleichszylinders 2 in Anlage ist und den Ausgleichsraum 16 zum Abstützelement 28 hin abdichtet.

**Patentansprüche**

1. Gasfeder (50), umfassend

   - einen Arbeitszylinder (1), der zusammen mit einer Ausgleichskolbenanordnung (10) einen mit einem Arbeitsmedium (1M) gefüllten Arbeitsraum (1a) umgrenzt, und
   - eine Arbeitsstange (6), die durch eine Öffnung des Arbeitszylinders (1) verschiebbar in den Arbeitsraum (1a) hineinragt,

   wobei die Ausgleichskolbenanordnung (10) von dem Druck des Arbeitsmediums (1M) und dem Druck eines in einem Ausgleichsraum (16) vorgesehenen, sich bei Temperaturerhöhung ausdehnenden Ausgleichsmediums (16M) in einem das Volumen des Arbeitsraum (1a) vergrößernden Sinne beaufschlagt ist, einen Ausgleichszylinder (12) , der den Arbeitszylinder (1) mit Abstand umschließt, sich mit seinem vom Arbeitsstangenaustrittsende (1b) der Gasfeder (50) entfernten Ende über den Arbeitszylinder (1) hinaus erstreckt und an diesem Ende geschlossen ist, wobei der Ausgleichsraum (16) im Wesentlichen von dem Ringraum zwischen Arbeitszylinder (1) und Ausgleichszylinder (12) gebildet ist,

**dadurch gekennzeichnet, dass** die Ausgleichskolbenanordnung von einem in einem Rückstellraum (15) vorgesehenen Rückstellmedium (15M) in einem das Volumen des Arbeitsraum (1) verkleinerndern Sinne beaufschlagt ist, und einen einzigen Ausgleichskolben (10) umfasst, der in dem Ausgleichszylinder (12) verschiebbar aufgenommen und topfförmig ausgebildet ist mit einem Topfboden (10a) und einem vom Topfboden (10a) in Richtung des Arbeitsstangenaustrittsendes (1b) abstehenden und mit dem Arbeitszylinder (1) in Eingriff stehenden Zylinderabschnitt (10b), wobei dieser Ausgleichskolben (10) den Arbeitsraum (1a), den Ausgleichsraum (16) und den Rückstellraum (15) voneinander trennt.

2. Gasfeder nach Anspruch 1,
**dadurch gekennzeichnet, dass** der Zylinderabschnitt (10b) des Ausgleichskolbens (10) in den Ringraum (16) zwischen dem Ausgleichszylinder (12) und dem Arbeitszylinder (1) eingreift.

3. Gasfeder nach Anspruch 1 oder 2,
**dadurch gekennzeichnet, dass** der Zylinderabschnitt (10b) des Ausgleichskolbens (10) zumindest mit einem Teil seiner Außenumfangsfläche an der Innenumfangsfläche des Ausgleichszylinders (12) anliegt.

4. Gasfeder nach einem der Ansprüche 1 bis 3,
**dadurch gekennzeichnet, dass** an dem in den Zylinderabschnitt (10b) des Ausgleichskolbens (10) ragenden freien Ende (1c) des Arbeitszylinders (1) eine flanschartige Erweiterung (7) vorgesehen, auf der der Ausgleichskolben (10) verschiebbar geführt ist.

5. Gasfeder nach einem der Ansprüche 1 bis 4,
**dadurch gekennzeichnet, dass** in dem Ringraum (16) zwischen Ausgleichszylinder (12) und Arbeitszylinder (1) wenigstens ein Stützelement (40) vorgesehen ist, welches den Arbeitszylinder (1) relativ zum Ausgleichszylinder (12) in Position hält und welches wenigstens einen Durchgang (40a) für Ausgleichsmedium (16M) aufweist.

6. Gasfeder nach Anspruch 5,
**dadurch gekennzeichnet, dass** der Ausgleichszylinder (12) für wenigstens ein Stützelement (40) wenigstens einen Anschlag (41) aufweist, welcher einen vorbestimmten Mindestabstand des wenigstens einen Stützelements (40) von dem Arbeitsstangenaustrittsende (1b) sicherstellt.

7. Gasfeder nach einem der Ansprüche 1 bis 6,
**dadurch gekennzeichnet, dass** am Zylinderabschnitt (10b), vorzugsweise dessen freiem Ende benachbart, eine Mehrzahl von Stützansätzen für den Arbeitszylinder (1) vorgesehen ist.

8. Gasfeder nach einem der Ansprüche 1 bis 7,
**dadurch gekennzeichnet, dass** das Ausgleichsmedium (16M) sich bei kontinuierlichem Temperaturanstieg kontinuierlich im Volumen vergrößert.

9. Gasfeder nach einem der Ansprüche 1 bis 8,
**dadurch gekennzeichnet, dass** das Ausgleichsmedium (16M) ganz oder teilweise inkompressibel ist.

10. Gasfeder nach einem der Ansprüche 1 bis 9,
**dadurch gekennzeichnet, dass** das Ausgleichsmedium (16M) ein Öl oder ein Dehnwachs ist oder ein Zweiphasenmedium, dessen eine Phase flüssig und dessen andere Phase gasförmig ist, beispielsweise Schwefelhexafluorid.

11. Gasfeder nach einem der Ansprüche 1 bis 10,
**dadurch gekennzeichnet, dass** der Arbeitsraum (1a) durch einen mit der Arbeitsstange (6) verbundenen Kolben (2) in eine erste Arbeitskammer (3) und eine zweite Arbeitskammer (4) unterteilt ist, wobei die erste Arbeitskammer (3) an die Ausgleichskolbenanordnung (10) angrenzt und sich die Arbeitsstange (6) durch die zweite Arbeitskammer (4) erstreckt.

12. Gasfeder nach einem der Ansprüche 1 bis 11,
**dadurch gekennzeichnet, dass** das Rückstellmedium (15M) von einem im Rückstellraum (15) vorgesehenen, unter Druck stehenden Gas gebildet ist.

**13.** Gasfeder nach einem der Ansprüche 1 bis 11,
**dadurch gekennzeichnet, dass** das Rückstellmedium (15M') von einer Federanordnung gebildet ist.

**Claims**

**1.** Pneumatic spring (50) comprising

- an operating cylinder (1), which together with a equalising piston arrangement (10) delimits a operating chamber (1a) filled with a working medium (1M), and
- a working rod (6), which projects displaceably through an opening of the operating cylinder (1) into the operating chamber (1 a),

wherein the equalising piston arrangement (10) is pressurised by the pressure of the working medium (1 M) and the pressure of an equalising medium (16M) which is provided in an equalising chamber (16) and expands upon an increase in temperature, so as to increase the volume of the operating chamber (1a), and

- an equalising cylinder (12), which surrounds the operating cylinder (1) at a distance, extends with its end remote from the working rod outlet end (1 b) of the pneumatic spring (50) over the operating cylinder (1) and is closed at this end, wherein the equalising chamber (16) is formed essentially by the annular space between the operating cylinder (1) and equalising cylinder (12),

**characterised in that** the equalising piston arrangement is pressurised by a restoring medium (15M) provided in a restoring chamber (15) so as to decrease the volume of the operating chamber (1) and comprises a single equalising piston (10), which is designed to be mounted displaceably in the equalising cylinder (12) and to be in the shape of a pot, with a pot base (10a) and a cylinder section (10b) projecting from the pot base (10a) in the direction of the working rod outlet end (1b) and in engagement with the operating cylinder (1), wherein said equalising piston (10) separates the operating chamber (1a), the equalising chamber (16) and the restoring chamber (15).

**2.** Pneumatic spring according to claim 1,
**characterised in that** the cylinder section (10b) of the equalising piston (10) engages in the annular chamber (16) between the equalising cylinder (12) and the operating cylinder (1).

**3.** Pneumatic spring according to claim 1 or 2,
**characterised in that** the cylinder section (10b) of the equalising piston (10) bears at least with part of its outer circumferential surface on the inner circumferential surface of the equalising cylinder (12).

**4.** Pneumatic spring according to one of claims 1 to 3,
**characterised in that** at the free end (1c) of the operating cylinder (1) projecting into the cylinder section (10b) of the equalising piston (10) a flange-like extension (7) is provided, on which the equalising piston (10) can be guided displaceably.

**5.** Pneumatic spring according to one of claims 1 to 4,
**characterised in that** at least one support element (40) is provided between the equalising cylinder (12) and operating cylinder (1), which holds the operating cylinder (1) in position relative to the equalising cylinder (12) and which has at least one passage (40a) for equalising medium (16M).

**6.** Pneumatic spring according to claim 5,
**characterised in that** the equalising cylinder (12) for at least one support element (40) has at least one stop (41), which ensures a predetermined minimum distance of the at least one support element (40) from the working rod outlet end (1 b).

**7.** Pneumatic spring according to one of claims 1 to 6,
**characterised in that** on the cylinder section (10b), preferably adjacent to its free end, a plurality of support shoulders are provided for the operating cylinder (1).

**8.** Pneumatic spring according to one of claims 1 to 7,
**characterised in that** the equalising medium (16M) continually enlarges in volume with a continual increase in temperature.

9. Pneumatic spring according to one of claims 1 to 8,
**characterised in that** the equalising medium (16M) is completely or partly incompressible.

10. Pneumatic spring according to one of claims 1 to 9,
**characterised in that** the equalising medium (16M) is an oil or an expanding wax or a two-phase medium, one phase of which is liquid and the other phase of which is gaseous, for example sulphur hexafluoride.

11. Pneumatic spring according to one of claims 1 to 10,
**characterised in that** the operating chamber (1a) is divided by a piston (2) connected to the working rod (6) into a first operating chamber (3) and a second operating chamber (4), wherein the first operating chamber (3) adjoins the equalising piston arrangement (10) and the working rod (6) extends through the second operating chamber (4)

12. Pneumatic spring according to one of claims 1 to 11,
**characterised in that** the restoring medium (15M) is formed by a pressurised gas provided in the restoring chamber (15).

13. Pneumatic spring according to one of claims 1 to 11,
**characterised in that** the restoring medium (15M') is formed by a spring arrangement.

## Revendications

1. Élément de suspension pneumatique (50), comportant :

- un cylindre de travail (1) qui, conjointement avec un système à piston d'équilibrage (10), délimite une chambre de travail (1a) contenant un fluide de travail (1 M), et
- une tige de travail (6), qui pénètre dans la chambre de travail (1a) en passant par un orifice du cylindre de travail (1),

le système à piston d'équilibrage (10) étant sollicité dans le sens d'une augmentation du volume de la chambre de travail (1a) par la pression du fluide de travail (1 M) et par la pression d'un fluide compensateur (16M), prévu dans une chambre de compensation (16) et se dilatant en présence d'une augmentation de la température,

- un cylindre compensateur (12) qui entoure à distance le cylindre de travail (1), s'étend au-delà du cylindre de travail (1) avec son extrémité éloignée de l'extrémité de sortie de la tige de travail (1 b) de l'élément de suspension pneumatique (50) et est fermé au niveau de ladite extrémité, la chambre de compensation (16) étant formée sensiblement par le compartiment annulaire entre le cylindre de travail (1) et le cylindre compensateur (12),

**caractérisé en ce que** le système à piston d'équilibrage (10) est sollicité dans le sens d'une diminution du volume de la chambre de travail (1a) par un fluide de rappel (15M) prévu dans une chambre de rappel (15), et comporte un seul piston d'équilibrage (10), qui est logé de manière mobile en translation dans le cylindre compensateur (12) et est réalisé en forme de cuve avec un fond (10a) et une partie cylindrique (10b) en saillie sur le fond (10a) vers l'extrémité de sortie de la tige de travail (1 b) et est en prise avec le cylindre de travail (1), sachant que ledit piston d'équilibrage (10) sépare l'une de l'autre la chambre de travail (1a), la chambre de compensation (16) et la chambre de rappel (15).

2. Élément de suspension pneumatique selon la revendication 1, **caractérisé en ce que** la partie cylindrique (10b) du piston d'équilibrage (10) s'engage dans le compartiment annulaire (16) entre le cylindre compensateur (12) et le cylindre de travail (1).

3. Élément de suspension pneumatique selon la revendication 1 ou 2, **caractérisé en ce que** la partie cylindrique (10b) du piston d'équilibrage (10) est en appui avec au moins une partie de sa surface périphérique extérieure contre la surface périphérique intérieure du cylindre compensateur (12).

4. Élément de suspension pneumatique selon l'une quelconque des revendications 1 à 3, **caractérisé en ce que**, sur l'extrémité (1c) libre du cylindre de travail (1), laquelle s'engage dans la partie cylindrique (10b) du piston d'équilibrage (10), est prévu un élargissement (7) en forme de collet, sur lequel le piston d'équilibrage (10) est mené de manière mobile en translation.

5. Élément de suspension pneumatique selon l'une quelconque des revendications 1 à 4, **caractérisé en ce que** dans le compartiment annulaire (16) entre le cylindre compensateur (12) et le cylindre de travail (1) est prévu au moins un élément d'appui (40), qui maintient le cylindre de travail (1) en position par rapport au cylindre compensateur (12) et qui comporte au moins un passage (40a) pour le fluide compensateur (16M).

6. Élément de suspension pneumatique selon la revendication 5, **caractérisé en ce que** le cylindre compensateur (12) comporte, pour au moins un élément d'appui (40), au moins une butée (41), qui garantit une distance minimale prédéterminée entre ledit au moins un élément d'appui (40) et l'extrémité de sortie de la tige de travail (1 b).

7. Élément de suspension pneumatique selon l'une quelconque des revendications 1 à 6, **caractérisé en ce qu'**il est prévu une pluralité de saillies d'appui pour le cylindre de travail (1) sur la partie cylindrique (10b), de préférence à proximité de l'extrémité libre de celle-ci.

8. Élément de suspension pneumatique selon l'une quelconque des revendications 1 à 7, **caractérisé en ce que** le fluide compensateur (16M) augmente de volume en continu pendant une augmentation continue de la température.

9. Élément de suspension pneumatique selon l'une quelconque des revendications 1 à 8, **caractérisé en ce que** le fluide compensateur (16M) est totalement ou partiellement incompressible.

10. Élément de suspension pneumatique selon l'une quelconque des revendications 1 à 9, **caractérisé en ce que** le fluide compensateur (16M) est une huile ou une cire élastique ou un fluide à deux phases, dont une phase est liquide et l'autre phase est gazeuse, tel qu'un hexafluorure de soufre.

11. Élément de suspension pneumatique selon l'une quelconque des revendications 1 à 10, **caractérisé en ce que** la chambre de travail (1a) est divisée en une première chambre de travail (3) et une deuxième chambre de travail (4) par un piston (2) relié à la tige de travail (6), la première chambre de travail (3) étant adjacente au système à piston d'équilibrage (10) et la tige de travail (6) passant à travers la deuxième chambre de travail (4).

12. Élément de suspension pneumatique selon l'une quelconque des revendications 1 à 11, **caractérisé en ce que** le fluide de rappel (15M) est formé par un gaz sous pression, prévu dans la chambre de rappel (15).

13. Élément de suspension pneumatique selon l'une quelconque des revendications 1 à 11, **caractérisé en ce que** le fluide de rappel (15M') est formé par un système de ressort.

Fig. 1

EP 1 795 777 B1

*19*

*10*

*18*  *17*  *20*

*Fig. 2*

*10a*

*20'*

*Fig. 3*

*10*  *7*  *3*  *1*

*15*

*12*  *18*  *9*  *16*

*Fig. 4*

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3141295 A1
- DE 2511289 A1

- US 4613115 A